# EUROPEAN PATENT APPLICATION

(11) **EP 3 603 769 A1**
(43) Date of publication of application: **05.02.2020**
(21) Application number: 17903697.5
(22) Date of filing: 31.03.2017
(51) Int. Cl.: B01D 53/02, B01D 53/62, B01J 20/06

(54) **CARBON DIOXIDE REMOVAL DEVICE AND METHOD FOR RECOVERING CARBON DIOXIDE ADSORPTION CAPACITY OF ADSORBENT**

(71) Applicant: Hitachi Chemical Co., Ltd., Chiyoda-ku Tokyo 100-6606 (JP)
(72) Inventor: AOSHIMA, Masahiro, Tokyo 100-6606 (JP); YOSHINARI, Yasuhiko, Tokyo 100-6606 (JP); NAKAMURA, Hidehiro, Tokyo 100-6606 (JP); ONODERA, Taigo, Tokyo 101-8280 (JP); YOSHIKAWA, Kouhei, Tokyo 101-8280 (JP); KANEEDA, Masato, Tokyo 100-6606 (JP)
(74) Representative: Hoffmann Eitle
(86) International application number: PCT/JP2017/013630
(87) International publication number: WO 2018/179351

(57) **Abstract**

A carbon dioxide removal device 100 that include an adsorbent 1 and a reaction vessel 10 that have the adsorbent 1 installed therein, and that brings a gas to be treated containing carbon dioxide into contact with the adsorbent 1 and thereby removes carbon dioxide from the gas, in which the carbon dioxide removal device 100 further includes a water adjustment unit 20 that supplies water to the reaction vessel 10 and discharges water from the reaction vessel 10.

## Description

### Technical Field

The present invention relates to a carbon dioxide removal device and a method for recovering the carbon dioxide adsorption capacity of an adsorbent.

### Background Art

As one of the causes of global warming, the discharge of greenhouse effect gases may be mentioned. Examples of the greenhouse effect gases include carbon dioxide (CO₂), methane (CH₄), and chlorofluorocarbons (CFCs and the like). Among the greenhouse effect gases, carbon dioxide has the greatest effect, and establishment of a removal system for carbon dioxide (carbon dioxide discharged from plants such as thermal power plants and ironworks) has been an urgent problem to be solved.

Regarding a solution to the problem described above, for example, methods for removing carbon dioxide, such as a chemical absorption method, a physical absorption method, a membrane separation method, an adsorption separation method, and a deep cold separation method, may be mentioned. For example, a method of separating and collecting carbon dioxide using a solid carbon dioxide adsorbent (CO₂ separation and collection method), may be mentioned.

In a carbon dioxide removal system using an adsorbent, a gas to be treated including carbon dioxide is introduced into a reaction vessel packed with an adsorbent, and carbon dioxide is adsorbed to the adsorbent by bringing the adsorbent and the gas into contact with each other under atmospheric pressure or under pressure. Thereafter, carbon dioxide is eliminated from the adsorbent by, for example, heating the adsorbent or reducing the pressure inside the reaction vessel. The adsorbent from which carbon dioxide has been eliminated can be used again for the removal of carbon dioxide by cooling or pressurizing.

In such a carbon dioxide removal system, zeolite has been mainly used as the adsorbent. For example, in Patent Literature 1 described below, a method for removing carbon dioxide by bringing a gas containing carbon dioxide into contact with a zeolite-based adsorbent, thereby adsorbing carbon dioxide to the adsorbent, and then eliminating carbon dioxide by heating the adsorbent, is described.

### Citation List

### Patent Literature

Patent Literature 1: Japanese Unexamined Patent Publication No. 2010-527757

### Summary of Invention

### Technical Problem

However, exhaust gases discharged from plants and the like may include nitrogen oxides (NOx) or sulfur oxides (SOx) in addition to carbon dioxide, and even when exhaust gases have been subjected to a denitrification process or a desulfurization process, several dozen ppm of NOx or SOx may remain. As a result of an investigation made by the inventors of the present invention, it was found that in a case in which a gas to be treated containing a trace amount of NOx or SOx together with water (water vapor, H₂O) as such is used, adsorbents such as zeolite (solid-based carbon dioxide scavengers) are poisoned, and the carbon dioxide adsorption capacity (CO₂ adsorption capacity) is decreased. In Patent Literature 1, no discussion is offered with regard to such poisoning of adsorbents, and there is no description on the configuration a carbon dioxide removal device in which such a situation has been taken into consideration.

Thus, it is an object of the present invention to provide a carbon dioxide removal device that can remove carbon dioxide efficiently even in a case in which a gas to be treated containing carbon dioxide further includes nitrogen oxides (NOx) or sulfur oxides (SOx) and water. Furthermore, it is another object to provide a method for recovering the carbon dioxide adsorption capacity of an adsorbent by using the above-described carbon dioxide removal device.

### Solution to Problem

The inventors of the present invention conducted a thorough investigation, and as a result, the inventors found that when an adsorbent having its carbon dioxide adsorption capacity (CO₂ adsorption capacity) decreased by poisoning is washed with water, a poisoning component (an acid, a metal salt, or the like) attached to the adsorbent is washed, the adsorbent surface can be exposed, and thereby the carbon dioxide adsorption capacity of the adsorbent can be recovered. The present inventors completed the present invention based on these findings.

That is, the present invention provides a carbon dioxide removal device to bring a gas to be treated containing carbon dioxide into contact with the adsorbent and thereby remove carbon dioxide from the gas, including an adsorbent and a reaction vessel having the adsorbent installed therein, in which the carbon dioxide removal device further includes a water adjustment unit to supply water to the reaction vessel and discharging water from the reaction vessel.

When the carbon dioxide removal device of the present invention is used, any poisoning component attached to an adsorbent can be washed by water that is supplied by the water adjustment unit. Therefore, even in a case in which the carbon dioxide adsorption capacity of the adsorbent has been decreased due to repeated use, the carbon dioxide adsorption capacity of the adsorbent can be recovered, and removal of carbon dioxide can be continuously carried out. That is, according to the carbon dioxide removal device of the present invention, carbon dioxide can be removed efficiently.

The water adjustment unit may include a water supply flow channel to supply water to the reaction vessel; a water supply amount adjustment unit to adjust the amount of water to be supplied from the water supply flow channel to the reaction vessel; a water discharge flow channel to discharge water from the reaction vessel; and a water discharge amount adjustment unit to adjust the amount of water to be discharged from the reaction vessel to the water discharge flow channel. In this case, the supply amount of water and the discharge amount of water can be adjusted, and operations such as, after water is supplied to the reaction vessel, retaining water in the reaction vessel and holding the adsorbent for a certain time in a state of being immersed in water, are enabled.

The carbon dioxide removal device may further include a carbon dioxide adsorption capacity detection unit to detect the carbon dioxide adsorption capacity of the adsorbent. In this case, the water supply amount adjustment unit may be configured to adjust the amount of water to be supplied to the reaction vessel on the basis of the carbon dioxide adsorption capacity of the adsorbent detected at the carbon dioxide adsorption capacity detection unit. When a carbon dioxide removal device having such a configuration is used, it is possible to perform an operation such as supplying water to the reaction vessel when the carbon dioxide adsorption capacity of the adsorbent reaches saturation.

The carbon dioxide removal device may further include a temperature detection unit to detect the temperature of the adsorbent. In this case, the water supply amount adjustment unit may be configured to adjust the amount of water to be supplied to the reaction vessel on the basis of the temperature of the adsorbent detected at the temperature detection unit. When a carbon dioxide removal device having such a configuration is used, it is possible to carry out an operation such as supplying water to the reaction vessel when the adsorbent has reached a certain temperature or higher by heating for eliminating carbon dioxide from the adsorbent. In this case, the adsorbent can be cooled by the water that is supplied to the reaction vessel.

The water adjustment unit may further include a first temperature adjustment unit to adjust the temperature of water to be supplied to the reaction vessel. When a carbon dioxide removal device having such a configuration is used, for example, the water to be supplied to the reaction vessel is vaporized by the first temperature adjustment unit, and thereby water vapor can be supplied into the reaction vessel. Furthermore, for example, in order to increase the solubility of a poisoning component (for example, a metal salt) attached to the adsorbent, the temperature of the water to be supplied to the reaction vessel can be adjusted.

The carbon dioxide removal device may further include a second temperature adjustment unit to adjust the temperature inside the reaction vessel. When a carbon dioxide removal device having such a configuration is used, operations such as eliminating the carbon dioxide adsorbed to the adsorbent by heating the adsorbent, and increasing the amount of the carbon dioxide adsorbed to the adsorbent by cooling the adsorbent, can be carried out. Furthermore, in a case in which an adsorbent whose adsorption capacity for CO₂ is decreased by adsorption of water (H₂O) is used, the carbon dioxide adsorption capacity can be recovered by heating the adsorbent by the second temperature adjustment unit.

The carbon dioxide removal device may include a temperature detection unit to detect the temperature of the adsorbent. In this case, the second temperature adjustment unit may be configured to adjust the temperature inside the reaction vessel based on the temperature detected at the temperature detection unit. When a carbon dioxide removal device having such a configuration is used, for example, the interior of the reaction vessel can be heated or cooled so that the solubility of the poisoning component (a metal salt or the like) attached to the adsorbent becomes highest, and therefore, the carbon dioxide adsorption capacity of the adsorbent can be easily recovered.

The carbon dioxide removal device may further include a water collection unit to collect water discharged from the reaction vessel. When a carbon dioxide removal device having such a configuration is used, the water supplied to the reaction vessel can be collected and reused. Furthermore, for example, in a case in which the adsorbent includes a metal oxide, a metal salt precipitated on the surface of the adsorbent can be collected.

The carbon dioxide removal device may include a third temperature adjustment unit to adjust the temperature of water inside the water collection unit. When a carbon dioxide removal device having such a configuration is used, the water inside the collection unit can be evaporated and reused. In a case in which the adsorbent includes a metal oxide, salts of the metal oxide dissolved in the water inside the collection unit can be collected and reused.

The adsorbent may contain a metal oxide including at least one selected from the group consisting of rare earth elements and zirconium. Such an adsorbent has an excellent carbon dioxide adsorption capacity in a case in which the gas to be treated contains water. Furthermore, in the case of using such an adsorbent, the temperature of eliminating carbon dioxide from the adsorbent can be lowered. That is, in the case of using such an adsorbent, carbon dioxide can be removed more efficiently.

The present invention further provides a method for recovering the carbon dioxide adsorption capacity of an adsorbent using the carbon dioxide removal device described above. In this method, water is supplied to the reaction vessel, water is brought into contact with the adsorbent, and then water inside the reaction vessel is discharged. Thereby, a poisoning component attached to the adsorbent can be washed, and the carbon dioxide adsorption capacity of the adsorbent can be recovered.

The above-described method includes a step of supplying water to the reaction vessel, bringing water into contact with the adsorbent, and then detecting the temperature of the adsorbent; and a step of heating or cooling the interior of the reaction vessel on the basis of the temperature of the adsorbent thus detected, and then discharging water inside the reaction vessel. In this method, the interior of the reaction vessel can be heated or cooled so that the solubility of a poisoning component (a metal salt or the like) attached to the adsorbent becomes highest, and therefore, the carbon dioxide adsorption capacity of the adsorbent can be easily recovered.

### Advantageous Effects of Invention

According to the present invention, a carbon dioxide removal device that can efficiently remove carbon dioxide even in a case in which the gas to be treated containing carbon dioxide further includes nitrogen oxides (NOx) or sulfur oxides (SOx) and water, can be provided. Furthermore, according to the invention, a method for recovering the carbon dioxide adsorption capacity of the adsorbent by using the carbon dioxide removal device described above can be provided.

### Brief Description of Drawings

FIG. 1 is a schematic diagram illustrating an embodiment of a carbon dioxide removal device.
FIG. 2 is a graph showing the desorption behavior of NOx from the adsorbent.
FIG. 3 is a graph showing the results of a CO₂ adsorption/desorption cycle test of Examples and Comparative Examples.
FIG. 4 is a diagram showing the Raman spectrum of the adsorbent of Example 1.

### Description of Embodiments

Hereinafter, embodiments for carrying out the present invention will be described in detail. However, the present invention is not intended to be limited to the following embodiments.

### <Carbon dioxide removal device>

The carbon dioxide removal device of the present embodiment is used for bringing a gas to be treated containing carbon dioxide into contact with an adsorbent, and thereby removing carbon dioxide from the gas. Specifically, carbon dioxide is removed from a gas to be treated, according to a method including an adsorption step of bringing a gas to be treated containing carbon dioxide into contact with an adsorbent and adsorbing carbon dioxide to the adsorbent; a desorption step of desorbing (eliminating) carbon dioxide from the adsorbent after the adsorption step; and a washing step of bringing, after the adsorption step, the adsorbent into contact with water and washing the adsorbent (carbon dioxide adsorption capacity recovering step). In the following description, first, the overall configuration of the carbon dioxide removal device of the present embodiment will be explained.

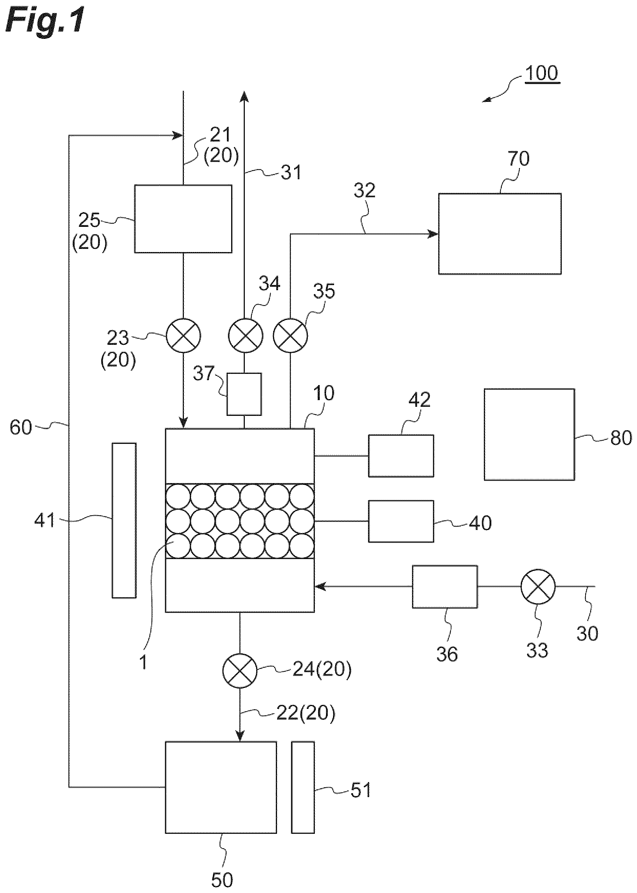

FIG. 1 is a schematic diagram illustrating a carbon dioxide removal device of the present embodiment. As shown in FIG. 1, the carbon dioxide removal device 100 includes an adsorbent 1, a reaction vessel 10, a water adjustment unit 20, a gas supply flow channel 30, a first gas discharge flow channel 31, a second gas discharge flow channel 32, a gas supply amount adjustment unit 33, a first gas discharge amount adjustment unit 34, a second gas discharge amount adjustment unit 35, a first gas concentration detection unit 36, a second gas concentration detection unit 37, a temperature detection unit 40, a second temperature adjustment unit 41, a pressure adjustment unit 42, a water collection unit 50, a third temperature adjustment unit 51, a water circulation flow channel 60, a carbon dioxide collection unit 70, and a control unit 80. The water adjustment unit 20 includes a water supply flow channel 21, a water discharge flow channel 22, a water supply amount adjustment unit 23, a water discharge amount adjustment unit 24, and a first temperature adjustment unit 25.

The adsorbent 1 is disposed (for example, packed) inside the reaction vessel 10. The packing amount and the position of disposition of the adsorbent 1 are not particularly limited. For example, the adsorbent 1 may be packed in the central portion of the reaction vessel 10, or may be disposed on a portion of the inner wall surface. As there are fewer voids between adsorbent particles (low porosity), the amount of gases other than carbon dioxide remaining in the voids is smaller, and therefore, the purity of carbon dioxide in the adsorbing gas can be increased. On the other hand, as there are more numerous voids between adsorbent particles (high porosity), the pressure loss can be reduced. The details of the adsorbent 1 and the reaction vessel 10 will be described later.

To the reaction vessel 10, the gas supply flow channel 30, the first gas discharge flow channel 31, the second gas discharge flow channel 32, the water supply flow channel 21, the water discharge flow channel 22, the temperature detection unit 40, and the pressure adjustment unit 42 are respectively connected. Furthermore, the second temperature adjustment unit 41 is provided outside the reaction vessel 10.

The gas supply flow channel 30 is a flow channel for supplying a gas to be treated to the reaction vessel in the adsorption step. The gas supply flow channel 30 is provided with a valve (gas supply amount adjustment unit) 33 for adjusting the supply amount of the gas to be treated, and the first gas concentration detection unit 36 for detecting the concentrations of gas components (for example, the concentration of carbon dioxide) in the gas to be treated.

The first gas discharge flow channel 31 is a flow channel for discharging the gas after treatment (a gas obtained after carbon dioxide has been removed from the gas to be treated) from the reaction vessel in the adsorption step. The first gas discharge flow channel 31 is provided with a valve (first gas discharge amount adjustment unit) 34 for adjusting the discharge amount of the gas after treatment, and the second gas concentration detection unit 37 for detecting the concentrations of gas components (for example, the concentration of carbon dioxide) in the gas after treatment.

The second gas discharge flow channel 32 is a flow channel for discharging a gas containing the carbon dioxide desorbed from the adsorbent in the desorption step. The second gas discharge flow channel 32 is provided with a valve (second gas discharge amount adjustment unit) 35 for adjusting the discharge amount of the gas containing carbon dioxide. The terminal on the downstream side of the second gas discharge flow channel 32 is connected to the carbon dioxide collection unit 70.

The water supply flow channel 21 is a flow channel for supplying water to the reaction vessel 10 in the washing step. The water supply flow channel 21 is provided with a valve (water supply amount adjustment unit) 23 for adjusting the amount of water to be supplied into the reaction vessel, and a first temperature adjustment unit 25 for adjusting the temperature of water.

The water discharge flow channel 22 is a flow channel for discharging the water that has been supplied into the reaction vessel 10, from the reaction vessel in the washing step. The water discharge flow channel 22 is provided with a valve (water discharge amount adjustment unit) 24 for adjusting the amount of water to be discharged from the reaction vessel. The terminal on the downstream side of the water discharge flow channel 22 is connected to the water collection unit 50.

The water collection unit 50 is connected with the water circulation flow channel 60, and the water collection unit 50 is provided outside the third temperature adjustment unit 51. The water circulation flow channel 60 is a flow channel for circulating and reusing the water collected at the water collection unit 50. The terminal on the downstream side of the water circulation flow channel 60 is connected to the water supply flow channel 21. Meanwhile, the water collection unit 50 may have any configuration.

The temperature detection unit 40 is configured to include an instrument for detecting the temperature inside the reaction vessel (for example, temperature of the adsorbent). Since the temperature inside the reaction vessel and the temperature of the adsorbent disposed inside the reaction vessel are approximately the same, the temperature detection unit 40 detects the temperature inside the reaction vessel and thereby detects the temperature of the adsorbent disposed inside the reaction vessel.

The pressure adjustment unit 42 is configured to include an instrument for adjusting the pressure inside the reaction vessel. Examples of the instrument constituting the pressure adjustment unit 42 include instruments (pump, compressor, and the like) capable of implementing the method of adjusting the total pressure that will be described later.

The second temperature adjustment unit 41 is an instrument for adjusting the temperature inside the reaction temperature (for example, temperature of the adsorbent). Examples of the instrument constituting the second temperature adjustment unit 41 include instruments (electric furnace, heat transfer tube, and the like) capable of implementing a method of heating the adsorbent and the method of cooling the adsorbent that will be described later.

The water supply amount adjustment unit 23, water discharge amount adjustment unit 24, first temperature adjustment unit 25, gas supply amount adjustment unit 33, first gas discharge amount adjustment unit 34, second gas discharge amount adjustment unit 35, first gas concentration detection unit 36, second gas concentration detection unit 37, temperature detection unit 40, second temperature adjustment unit 41, pressure adjustment unit 42, and third temperature adjustment unit 51 are electrically connected to the control unit 80. The control unit 80 controls the operation of the water supply amount adjustment unit 23, water discharge amount adjustment unit 24, first temperature adjustment unit 25, gas supply amount adjustment unit 33, first gas discharge amount adjustment unit 34, second gas discharge amount adjustment unit 35, second temperature adjustment unit 41, pressure adjustment unit 42, and third temperature adjustment unit 51, on the basis of the electric signals coming from the first gas concentration detection unit 36, second gas concentration detection unit 37, and temperature detection unit 40.

### <Carbon dioxide removal method>

Next, a method for removing carbon dioxide using the carbon dioxide removal device 100 of the present embodiment, and a method for recovering the adsorption capacity of the adsorbent 1 will be explained.

### [Adsorption step]

In the adsorption step, a gas to be treated is supplied into a reaction vessel 10 through a gas supply flow channel 30. Thereby, the gas to be treated is brought into contact with an adsorbent 1 installed in the reaction vessel, and carbon dioxide is removed from the gas. The gas to be treated is discharged from the reaction vessel 10 to the first gas discharge flow channel 31.

The gas to be treated contains, for example, carbon dioxide (CO₂), water (water vapor, H₂O), and nitrogen oxides (NOx) and/or sulfur oxides (SOx). Specific examples of such a gas include a gas discharged from a plant (particularly, a large-sized plant) or the like (for example, a boiler exhaust gas of a coal thermal power plant), and a combustion exhaust gas of an automobile or the like. The boiler exhaust gas and the combustion exhaust gas include carbon dioxide (CO₂), water (water vapor, H₂O), nitrogen (N₂), oxygen (O₂), nitrogen oxides (NOx), sulfur oxides (SOx), monoxide (CO), hydrocarbons such as carbon methane (CH₄) and hydrogen sulfide (H₂S), and ashes and dust.

In the adsorption step, the supply amount of the gas to be treated and the discharge amount of the gas after treatment may be adjusted using the gas supply amount adjustment unit 33 provided at the gas supply flow channel 30 and the first gas discharge amount adjustment unit 34 provided at the first gas discharge flow channel 31.

In the adsorption step, the temperature of the adsorbent 1 may be adjusted by means of the second temperature adjustment unit 41. By adjusting the temperature T₁ of the adsorbent 1 at the time of bringing the gas to be treated into contact with the adsorbent 1 in the adsorption step, the CO₂ adsorption amount can be adjusted. As the temperature T₁ is higher, the CO₂ adsorption amount of the adsorbent 1 is likely to be smaller. The temperature T₁ may be -20°C to 100°C, or may be 10°C to 40°C.

The temperature T₁ of the adsorbent 1 may be adjusted by heating or cooling the adsorbent 1, and heating and cooling may be used in combination. Furthermore, the temperature T₁ of the adsorbent may also be adjusted indirectly by heating or cooling the gas to be treated. Examples of the method of heating the adsorbent 1 include a method of directly bringing a heating medium (for example, a heated gas or liquid) into contact with the adsorbent 1; a method of circulating a heating medium (for example, a heated gas or liquid) into a heat transfer tube or the like and heating the adsorbent 1 by thermal conduction through a heat transfer surface; and a method of heating the adsorbent 1 using an electric furnace or the like, which has been caused to electrically generate heat. Examples of the method of cooling the adsorbent 1 include a method of directly bringing a cooling medium (for example, a cooled gas or liquid) into contact with the adsorbent 1; and a method of circulating a cooling medium (for example, a cooled gas or liquid) into a heat transfer tube or the like and cooling by thermal conduction from the heated transfer surface.

In the adsorption step, the total pressure of the atmosphere in which the adsorbent is present may be adjusted by the pressure adjustment unit 42. In the adsorption step, the CO₂ adsorption amount can be adjusted by adjusting the total pressure of the atmosphere in which the adsorbent 1 is present. As the total pressure is higher, the CO₂ adsorption amount is likely to become larger. From the viewpoint that the carbon dioxide removal efficiency is further increased, the total pressure is preferably 0.1 atmospheres or higher, and more preferably 1 atmosphere or higher. From the viewpoint of energy saving, the total pressure may be 10 atmospheres or lower, may be 2 atmospheres or lower, or may be 1.3 atmospheres or lower. The total pressure may be 5 atmospheres or higher.

The total pressure of the atmosphere in which the adsorbent 1 is present may be adjusted by adding pressure or reducing pressure, or pressure addition or pressure reduction may be used in combination. Examples of the method of adjusting the total pressure include a method of mechanically adjusting the pressure using a pump, a compressor, or the like; and a method of supplying a gas having a pressure that is different from the pressure of the ambient atmosphere of the adsorbent.

### [Desorption step]

In the desorption step, carbon dioxide is desorbed from the adsorbent by a method of utilizing the temperature-dependency of the adsorption amount (temperature swing method, a method of utilizing the difference in the CO₂ adsorption amount of the adsorbent along with temperature change); a method of utilizing the pressure-dependency of the adsorption amount (pressure swing method, a method of utilizing the difference in the CO₂ adsorption amount of the adsorbent along with pressure change); a method of using these methods in combination (temperature/pressure swing method); or the like.

In the method of utilizing the temperature-dependency of the adsorption amount, for example, the temperature of the adsorbent 1 in the desorption step is made higher than in the adsorption step. Heating of the adsorbent 1 can be carried out using the second temperature adjustment unit 41 described above. Examples of the method of heating the adsorbent 1 include a method similar to the method of heating the adsorbent 1 in the adsorption step described above; and a method of utilizing the peripheral exhaust heat. From the viewpoint of suppressing the energy required for heating, it is preferable to utilize the peripheral exhaust heat.

The temperature difference (T₂ - T₁) between the temperature T₁ of the adsorbent 1 in the adsorption step and the temperature T₂ of the adsorbent 1 in the desorption step may be 200°C or less, may be 100°C or less, or may be 50°C or less, from the viewpoint of energy saving. The temperature difference (T₂ - T₁) may be 10°C or greater, may be 20°C or greater, or may be 30°C or greater, from the viewpoint that the carbon dioxide adsorbed to the adsorbent 1 can be easily desorbed. The temperature T₂ of the adsorbent 1 in the desorption step may be, for example, 40°C to 300°C, may be 50°C to 200°C, or may be 80°C to 120°C.

In the method of utilizing the pressure-dependency of the adsorption amount, as the total pressure of the atmosphere in which the adsorbent 1 is present (for example, total pressure inside the vessel containing the adsorbent) is higher, the CO₂ adsorption amount increases. Therefore, it is preferable to change the total pressure of the desorption step to be lower than the total pressure of the adsorption step. The total pressure may be adjusted by adding pressure or reducing pressure, or pressure addition and pressure reduction may be used in combination. The adjustment of the total pressure can be carried out using the pressure adjustment unit 42 described above. Regarding the method of adjusting the total pressure, for example, a method similar to the adsorption step described above may be mentioned. From the viewpoint that the amount of CO₂ elimination becomes large, the total pressure employed in the desorption step may be the pressure of ambient atmosphere (for example, 1 atmosphere), or may be less than 1 atmosphere.

In the desorption step, the gas containing carbon dioxide desorbed from the adsorbent 1 is discharged from the reaction vessel 10 to the second gas discharge flow channel 32. In the desorption step, the discharge amount of the gas containing carbon dioxide may be adjusted by using the second gas discharge amount adjustment unit 35. Furthermore, in the present embodiment, the gas containing carbon dioxide thus discharged can be collected using the carbon dioxide collection unit 70. Carbon dioxide thus collected may be reused in a field where carbon dioxide is utilized. For example, in hothouses for greenhouse cultivation, since the growth of plants is accelerated by increasing the CO₂ concentration, there are occasions in which the CO₂ concentration is increased to a level of 1,000 ppm. Therefore, the carbon dioxide thus collected may be reused for increasing the CO₂ concentration.

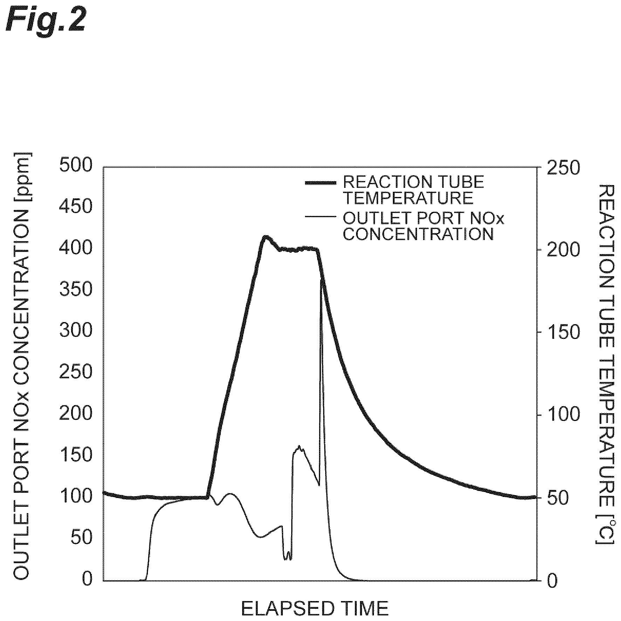

Conventionally, the gas to be treated is not supplied in the desorption step; however, the desorption step may be carried out in a state in which the gas has been supplied. Furthermore, in the desorption step, a gas including water (water vapor) may be supplied into the reaction vessel 10 in a temperature range in which carbon dioxide is desorbed. In a case in which the gas to be treated includes NOx and/ SOx, there are occasions in which the adsorbent adsorbs NOx and/or SOx in addition to carbon dioxide. Since NOx and SOx may cause deterioration of the adsorbent as described above, it is desired to desorb NOx and SOx from the adsorbent as much as possible in the course of the adsorption/desorption cycle of carbon dioxide. On the other hand, according to the findings of the inventors of the present invention, in a case in which the reaction vessel is heated to 200°C in order to desorb carbon dioxide from the adsorbent in the desorption step, and a gas including water (water vapor) is supplied, as shown in FIG. 2, elimination of NOx from the adsorbent is accelerated. By utilizing this, when a gas including water (water vapor) is supplied in a temperature range in which carbon dioxide is desorbed, a portion of NOx and SOx that have adsorbed to the adsorbent can be removed. Water (water vapor) may be supplied by the water adjustment unit 20, or a gas to be treated, in which the amount of water has been adjusted, may be supplied. The adjustment of the amount of water in the gas to be treated may be carried out using an instrument that adjusts the amount of water (H₂O concentration) in the gas by utilizing the temperature-dependency of saturated vapor pressure of water.

### [Washing step]

In the washing step, water is supplied to the reaction vessel 10 by the water adjustment unit 20, the adsorbent 1 is brought into contact with water, and then water is discharged from the reaction vessel 10. The water used for the washing step is supplied to the reaction vessel 10 through the water supply flow channel 21 and is discharged from the reaction vessel 10 through the water discharge flow channel 22.

As described above, in a case in which the gas to be treated contains carbon dioxide, water, and NOx and/or SOx, the adsorbent is poisoned, and the CO₂ adsorption capacity is decreased. This is noticeable in a case in which the adsorbent includes a metal component (for example, a metal oxide). The inventors of the present invention speculate the cause for this as follows.

That is, in a case in which the gas to be treated comes into contact with the adsorbent, when NOx and/or SOx adsorbs to the surface of the adsorbent, and then water co-adsorbs to the surface, water reacts with the poisoning component, and acid (nitric acid or sulfuric acid) is produced (as an example, a reaction by which NOx and water produce nitric acid is shown by the following expressions). It is contemplated that this acid causes the decrease of the carbon dioxide adsorption capacity of the adsorbent. Particularly, it is speculated that in a case in which the adsorbent includes a metal component (for example, a metal oxide), the carbon dioxide adsorption capacity is markedly decreased due to the metal salt (nitric acid salt or sulfuric acid salt) produced by a reaction between the metal component and the above-mentioned acid.

NO + 1/2O₂ → NO₂

3NO₂ + H₂O → 2HNO₃ + NO

From the reasons described above, in a case in which large amounts of NOx and SOx are included, it is preferable to remove the compounds in advance; however, it is difficult to completely remove these. For example, in a coal thermal power plant, even when a denitrification process and a desulfurization process have been carried out, about 15 ppm of NOx and SOx remain. On the other hand, in the carbon dioxide removal device of the present embodiment, by implementing the washing step, a poisoning component (an acid, a metal salt, or the like) attached to the adsorbent can be washed, and a clean surface of the adsorbent can be exposed. Therefore, when the carbon dioxide removal device of the present embodiment is used, the carbon dioxide adsorption capacity of the adsorbent can be recovered, and the CO₂ adsorption/desorption cycle characteristic of the adsorbent can be enhanced. That is, when the carbon dioxide removal device of the present embodiment is used, even in a case in which the gas to be treated contains carbon dioxide, water, and NOx and/or SOx, carbon dioxide can be removed efficiently.

The water used in the washing step may be a liquid or a gas (water vapor), and from the viewpoint of having an excellent effect of recovering the carbon dioxide adsorption capacity, it is preferable that the water is a liquid. That is, it is preferable that the water adjustment unit 20 is configured to supply liquid water to the reaction vessel. In the washing step, the temperature of water to be supplied may be adjusted by the first temperature adjustment unit 25. By adjusting the temperature of water, for example, when the adsorbent includes a metal component, the solubility of a poisoning component attached to the adsorbent (for example, a metal salt precipitated on the adsorbent surface) can be increased. From such a point of view, the temperature of water may be, for example, 0°C to 100°C, may be 30°C to 100°C, may be 60°C to 100°C, may be 0°C to 60°C, may be 0°C to 30°C, or may be 30°C to 60°C.

In the washing step, the supply amount of water may be adjusted by the water supply amount adjustment unit 23, and the discharge amount of water may be adjusted by the water discharge amount adjustment unit 24. For example, by reducing the discharge amount of water compared to the supply amount of water, or by not implementing discharge of water during the supply of water, water may be retained in the reaction vessel 10, and thereby the adsorbent 1 may be immersed in water.

The supply amount of water may be adjusted as appropriate according to the amount of the poisoning component (an acid, a metal salt, or the like) attached to the surface of the adsorbent 1. In the case of using an adsorbent including a metal component, it is preferable to supply water such that a minimum amount of water is brought into contact with the adsorbent 1 on the basis of the solubility in water of a metal salt to be precipitated. For example, when cerium nitrate is precipitated, since the solubility of cerium nitrate in 100 ml of water is 234 g at 20°C, in a case in which the washing step is carried out with water at 20°C when precipitation of 234 g of cerium nitrate is expected, it is preferable to supply water such that at least 100 ml of water is brought into contact with the adsorbent 1. The supply amount of water may be, for example, 0.1 mL/g or more, may be 1 mL/g or more, or may be 10 mL/g or more, based on the total mass of the adsorbent.

In the washing step, the supply amount of water may be measured by using a measuring instrument for measuring the supply amount of water, and the supply amount of water may be adjusted on the basis of the supply amount of water thus measured.

The washing step may include a step of supplying water to the reaction vessel 10, bringing water into contact with the adsorbent 1, and then detecting the temperature of the adsorbent 1 at the temperature detection unit 40; and a step of controlling the second temperature adjustment unit 41 on the basis of the temperature of the adsorbent 1 thus detected, heating or cooling the interior of the reaction vessel 10, and then discharging water in the reaction vessel 10 by the water adjustment unit. In the step of controlling the second temperature adjustment unit 41 on the basis of the temperature of the adsorbent 1 thus detected, heating or cooling the interior of the reaction vessel 10, and then discharging water in the reaction vessel 10 by the water adjustment unit, for example, the interior of the reaction vessel is heated or cooled so as to maintain high solubility for a poisoning component (a metal salt or the like). Specifically, in a case in which the temperature detected at the temperature detection unit 40 is lower than a certain temperature, the interior of the reaction vessel is heated, and in a case in which the temperature detected at the temperature detection unit 40 is higher than a certain temperature, the interior of the reaction vessel is cooled. Next, after it is detected that a certain temperature has been reached by heating or cooling, water in the reaction vessel is discharged.

The timing of carrying out the washing step is not particularly limited, and the washing step may be carried out after the adsorption step and before the desorption step, or may be carried out after the desorption step. Furthermore, in a case in which the adsorption step and the desorption step are repeatedly carried out, the washing step may be carried out in each cycle, or the washing step may be carried out after the adsorption step and the desorption step are repeatedly carried out a predetermined number of times.

In the case of carrying out the washing step in each cycle, the washing step may be carried out based on the temperature of the adsorbent 1. That is, the amount of water to be supplied to the reaction vessel 10 may be adjusted by controlling the water supply amount adjustment unit 23 on the basis of the temperature of the adsorbent 1. For example, the water supply amount adjustment unit 23 may be controlled such that water is supplied in a case in which the temperature of the adsorbent 1 reaches a certain temperature or higher through heating in the desorption step. Thereby, cooling and washing of the adsorbent 1 can be carried out simultaneously. At this time, the amount of water to be supplied into the reaction vessel 10 may be adjusted such that the temperature of the adsorbent falls in the temperature range in which carbon dioxide is adsorbed. Such control may be carried out using the control unit 80.

In a case in which the washing step is carried out after the adsorption step and the desorption step are repeatedly carried out a predetermined number of times, the washing step may be carried out on the basis of the carbon dioxide adsorption capacity of the adsorbent 1. That is, the amount of water to be supplied to the reaction vessel 10 may be adjusted by controlling the water supply amount adjustment unit 23 on the basis of the carbon dioxide adsorption capacity of the adsorbent 1. For example, the water supply amount adjustment unit 23 may be controlled such that water is supplied in a case in which the carbon dioxide adsorption capacity becomes a certain value or less. At this time, the amount of water to be supplied may be adjusted in accordance with the extent of the decrease in the carbon dioxide adsorption capacity. As the amount of water to be supplied is larger, an effect of washing the adsorbent is obtained. The carbon dioxide adsorption capacity of the adsorbent can be determined from the difference between the concentration of carbon dioxide in the gas to be treated and the concentration of carbon dioxide in the gas after treatment. The carbon dioxide concentration in the gas to be treated can be detected by the first gas concentration detection unit 36, and the concentration in the gas after treatment can be detected by the second gas concentration detection unit 37. In other words, the first gas concentration detection unit 36 and the second gas concentration detection unit 37 constitute a carbon dioxide adsorption capacity detection unit. Furthermore, such control may be carried out using the control unit 80.

In the present embodiment, the water discharged in the washing step by the water collection unit 50 may be collected. The water thus collected can be used again in the washing step by being supplied to the reaction vessel 10 through the water circulation flow channel 60. At this time, since the water thus collected includes a poisoning component (an acid, a metal salt, or the like) attached to the adsorbent 1, it is preferable to separate water and the poisoning component. For example, water and the poisoning component can be separated by heating and vaporizing water by the third temperature adjustment unit 51. In a case in which the poisoning component is a metal salt, a calcination product (metal oxide) obtainable by calcining the metal salt may be reused as the adsorbent. Furthermore, NOx and SOx generated by calcination may be collected. The heating method is not particularly limited. For example, a method of using the water collection unit 50 as a core tube and heating in an electric furnace may be mentioned. Furthermore, the method of circulating the collected water is also not particularly limited.

Thus, the adsorption step, desorption step, and washing step have been explained; however, the method for removing carbon dioxide using the carbon dioxide removal device 100 of the present embodiment may further include other steps in addition to the adsorption step, desorption step, and washing step. For example, in the case of heating the adsorbent 1 in the desorption step, the method for removing carbon dioxide may further include a step of cooling the adsorbent 1. Regarding the method of cooling the adsorbent 1, the method described above may be employed. As explained above, the adsorbent 1 may be cooled by supplying water into the reaction vessel 10 by the water adjustment unit 20.

Furthermore, for example, in a case in which an adsorbent whose carbon dioxide adsorption capacity is decreased by adsorbing H₂O (for example, zeolite) is used, a step of desorbing water (H₂O) from the adsorbent after the washing step may be further included. For example, water may be desorbed by heating the adsorbent by the second temperature adjustment unit 41 mentioned above.

Further, for example, when the gas to be treated contains SOx, NOx, dust and soot, and the like (for example, in a case in which the gas is an exhaust gas discharged from a coal thermal power plant or the like), the method for removing carbon dioxide according to the present embodiment may further include, prior to the adsorption step, an impurities removal step of removing impurities such as SOx, NOx, and dust and soot from the gas to be treated, from the viewpoint that it is easy to maintain the carbon dioxide adsorption capacity of the adsorbent 1. The impurities removal step can be carried out using a removal device such as a denitrification device, a desulfurization device, or a dust removal device, and the gas to be treated can be brought into contact with the adsorbent on the downstream side of such a device.

### <Adsorbent and reaction vessel>

Next, the details of the adsorbent 1 and the reaction vessel 10 will be explained.

### (Adsorbent)

The adsorbent 1 is an adsorbent used for removing carbon dioxide and has carbon dioxide adsorption properties. The adsorbent 1 includes at least one selected from the group consisting of, for example, a metal oxide, activated carbon, a carbonate of an alkali metal, a hydroxide of an alkali metal, a layered double hydroxide, and a solid organic compound. In the present embodiment, a single kind of adsorbent may be used, or a plurality of adsorbents may be used in combination. Furthermore, an adsorbent supported on another adsorbent (carrier) may also be used. Supporting may be carried out by a method such as impregnation.

The metal oxide may be a metal oxide containing one kind of metal element, or may be a composite metal oxide containing a plurality of kinds of metal elements. From the viewpoint of having excellent adsorption properties for carbon dioxide, it is preferable that the metal oxide contains at least one selected from the group consisting of rare earth elements, zirconium, and zinc, and it is more preferable that the metal oxide contains cerium (Ce). Examples of the metal oxide containing cerium include CeOx (x = 1.5 to 2.0), and specific examples include CeO₂ and Ce₂O₃. The metal oxide may be silica (SiO₂), alumina (Al₂O₃), zeolite, or the like. In the metal oxide, from the viewpoints of an increase in the specific surface area, an enhancement of heat resistance, a decrease in the amount of metal used, an oxide (composite oxide or the like) containing at least one metal selected from the group consisting of rare earth metals (for example, cerium) and zirconium may be supported on silica, alumina, or zeolite. In the present embodiment, a single kind of metal oxide may be used, or a plurality of kinds of metal oxides may be used in combination.

Incidentally, when zeolite is brought into contact with the gas to be treated containing water, the adsorption properties for carbon dioxide are decreased. Therefore, it is general to remove water from the gas to be treated in the previous step of bringing the gas into contact with the adsorbent. For example, in regard to the method of removing carbon dioxide described in Patent Literature 1, when the gas to be treated contains water, it is preferable to reduce the concentration of water in the gas is decreased to 400 ppm or less, and it is considered more preferable to decrease the concentration of water to 20 ppm or less. On the other hand, in a case in which an oxide containing at least one selected from the group consisting of rare earth elements, zirconium, and zinc as mentioned above is used, even after being brought into contact with H₂O, the carbon dioxide adsorption properties are satisfactory, and the temperature employed at the time of desorbing carbon dioxide can be lowered. The inventors of the present invention speculate the reason for this as follows.

That is, with regard to the oxide, when the oxide reacts with H₂O at the surface, a hydroxyl group (-OH) is formed on the surface of the oxide. This hydroxyl group reacts with carbon dioxide and forms hydrogen carbonate (-CO₃H). Since carbon dioxide is adsorbed to the metal oxide at the surface of the metal oxide as such, it is speculated that the above-described effect is obtained.

The metal oxide may be, for example, a porous metal oxide (porous metal oxide), a layered metal oxide (layered metal oxide), or a metal oxide having a core-shell structure. The metal oxide is preferably a metal oxide having a large specific surface area, and from this point of view, a porous metal oxide is preferred.

The layered metal oxide may be, for example, an oxide obtainable by calcining a layered double hydroxide. The layered composite hydroxide is also referred to as hydrotalcite-like compound and contains two or more kinds of metal elements, and the composition thereof can be represented by the following Formula (1):

[M(²⁺)₁₋ₓM⁽³⁺⁾ₓ(OH)₂][A⁽ⁿ⁻⁾_{x/n}·yH₂O] ··· (1)

In the above formula, M⁽²⁺⁾ represents a divalent metal ion and represents, for example, at least one metal ion selected from the group consisting of magnesium (Mg) ion, manganese (Mn) ion, iron (Fe) ion, cobalt (Co) ion, nickel (Ni) ion, copper (Cu) ion, and zinc (Zn) ion. M⁽³⁺⁾ represents a trivalent metal ion and represents at least one ion selected from the group consisting of, for example, aluminum (Al) ion, chromium (Cr), iron (Fe) ion, cobalt (Co) ion, and indium (In) ion. A⁽ⁿ⁻⁾ represents an n-valent anion and represents, for example, at least one ion selected from the group consisting of carbonate ion, nitrate ion, and sulfate ion. In Formula (1) described above, M⁽²⁺⁾, M⁽³⁺⁾, and A⁽ⁿ⁻⁾ may be each a single ion, or may be a plurality of kinds of ions.

Regarding the method of synthesizing the metal oxide, preparation methods such as an impregnation method, a kneading method, a co-precipitation method, and a sol-gel method may be mentioned. For example, in a method of synthesizing a metal oxide containing cerium, a basic compound such as ammonia, sodium hydroxide, or calcium hydroxide may be added to a solution containing an acidic salt of cerium (for example, nitrate) to adjust the pH to 7 to 10, and the metal oxide may be precipitated. When an oxide is formed by precipitation, the precipitate may be used as it is, or the precipitate may be further oxidized by calcining.

Examples of the method of synthesizing a layered double hydroxide include preparation methods such as an impregnation method, a kneading method, a co-precipitation method, and a sol-gel method. For example, in a method of synthesizing a layered double hydroxide, sodium carbonate is added to a solution containing a nitrate containing Mg and a nitrate containing Al, subsequently a basic compound such as ammonia, sodium hydroxide, or calcium hydroxide is added thereto to adjust the pH to 8 to 11, and a product may be precipitated. The precipitate thus obtainable is a layered double hydroxide, and by calcining the precipitate, a metal oxide or a composite metal oxide can be obtained. The calcination temperature is not particularly limited, and for example, the calcination temperature may be 200°C or higher.

The composition or the like of activated carbon is not particularly limited. The activated carbon is such that in a case in which the activated carbon contains a large amount of nitrogen element (N) therein, basicity increases, and the carbon dioxide adsorption properties may be enhanced. Regarding a method of synthesizing such activated carbon, a method of bringing activated carbon into contact with a gas including ammonia (NH₃), a method of synthesizing activated carbon from an organic compound containing a large amount of nitrogen element, and the like may be mentioned.

The solid organic compound is preferably an organic compound having basicity. For example, an organic compound having an amino group may be mentioned.

The shape of the adsorbent is not particularly limited, and examples may include a powder shape, a pellet shape, a particulate shape, and a honeycomb shape. Furthermore, according to the present embodiment, the adsorbent may be used in the form of being supported on a honeycomb-shaped base material. In a case in which the adsorbent is supported on a honeycomb and used, since the porosity can be increased, the pressure loss can be made small. The shape and form of use of the adsorbent may be determined in consideration of the required reaction rate, pressure loss, the purity (CO₂ purity) of the gas (adsorbing gas) to be adsorbed to the adsorbent, and the like.

### (Reaction vessel)

The reaction vessel 10 may be a fixed bed type, a rotor type, or a fluidized bed type. The rotor type and the fluidized bed type are systems in which the adsorbent itself is moved without performing replacement of the gas to be circulated in the reaction vessel (circulating gas) or the like.

A fixed bed type reaction vessel is configured such that, for example, adsorption and desorption of carbon dioxide is carried out by packing an adsorbent 1 (for example, a particulate adsorbent) inside the reaction vessel, and changing the temperature and pressure of the gas to be treated or inside the reaction vessel without moving the adsorbent 1 itself. In this system, since the movement of the adsorbent is reduced, abrasion of the adsorbent 1 caused by contact between the particles of the adsorbent 1 or between the adsorbent 1 and the reaction vessel can be reduced, and deterioration of the performance of the adsorbent 1 can be suppressed. Furthermore, since the packing density can be increased, the porosity is low, and the amount of carbon dioxide removal per volume of the reaction vessel can be increased.

A rotor type reaction vessel may be, for example, a reaction vessel including a vessel; an adsorbent packed part provided inside the vessel; and a partition plate for partitioning the gas that flows into the vessel. The adsorbent packed part is packed with the adsorbent 1. The interior of this reaction vessel is partitioned into a plurality of regions by partition plates, and the reaction vessel is divided into a carbon dioxide adsorption region, an adsorbent heating region (CO₂ elimination region), an adsorbent cooling region, and the like, according to the type of the gas that is circulated. Therefore, in this system, the adsorbent 1 can be moved into the carbon dioxide adsorption region, the adsorbent heating region (CO₂ elimination region), the adsorbent cooling region, and the like by rotating the adsorbent packed part, and an adsorption/desorption cycle including adsorption of CO₂ (adsorption step), heating of the adsorbent 1 (elimination step), cooling of the adsorbent 1 (cooling step), and the like can be carried out. In this system, even in a case in which a temperature swing method of heating the adsorbent 1 by circulating a gas for heating and eliminating CO₂ is carried out, since replacement of the gas to be circulated in the reaction vessel is unnecessary, the configuration of piping, valves, and the like is simplified. Furthermore, since the sizes of the various regions can be determined by changing the positions of providing the partition plates, the ratio of the circulation time of the gas to be treated (time of causing the adsorption of carbon dioxide), the heating time for the adsorbent 1 (time of eliminating carbon dioxide), the cooling time for the adsorbent 1, and the like can be easily determined.

In the rotor type, a honeycomb (for example, a honeycomb rotor) having the adsorbent 1 supported thereon may be disposed inside the reaction vessel. In this case, since the adsorbent 1 is supported on the honeycomb, abrasion of the adsorbent 1 itself can be reduced, and deterioration of the performance of the adsorbent 1 can be suppressed.

In the case of using two or more kinds of adsorbents 1 in the rotor system, two or more reaction vessels may be installed, and different adsorbents 1 may be disposed in the respective reaction vessels, or in one reaction vessel, adsorbents 1 may be disposed at different sites inside the reaction vessel. For example, different adsorbents 1 may be disposed respectively on the upstream side and the downstream side in the reaction vessel 10. In this case, for example, an adsorbent containing cerium oxide may be disposed on the upstream side, and an adsorbent containing zeolite may be disposed on the downstream side. By adopting such a configuration, for example, as the gas to be treated is circulated in a direction from the upstream side to the downstream side, and a gas for heating is circulated in a direction from the downstream side to the upstream side, zeolite comes into contact with water, and lowering of the carbon dioxide adsorption capacity of the zeolite can be suppressed. Furthermore, in a case in which the adsorbent 1 is supported on a honeycomb (honeycomb rotor), the respective places of supporting the adsorbent 1 within the honeycomb may be divided.

A fluidized bed type reaction vessel is configured such that the adsorbent can be fluidized by electric power (conveyor, blower, or the like), for example, by reducing the packing amount of the adsorbent 1. In the case of using a fluidized bed type reaction vessel, for example, a reaction vessel in which a gas to be treated is circulated and a vessel for heating in which a gas for heating is circulated are installed, an adsorbent 1 (for example, a particulate or powdered adsorbent) is moved between the reaction vessel and the vessel for heating using electric power (conveyor, blower, or the like), and thereby adsorption and desorption of carbon dioxide may be repeated. In this system, since replacement of the gas to be circulated in the reaction vessel is unnecessary, the configuration of piping, valves, and the like is simplified. Furthermore, different porosities can be set for the occasion of adsorption and the occasion of desorption of carbon dioxide. For example, at the time of desorption, the system may be set up so as to have low porosity, and the purity (CO₂ purity) of the gas to be adsorbed to the adsorbent (adsorbing gas) may be increased. In a case in which a gas with a very large gas flow rate (boiler exhaust gas or the like) is used as the gas to be treated, removal of carbon dioxide may be carried out by a method of blowing up the adsorbent 1 by means of a gas instead of a conveyor. Since the number of mechanical parts is decreased compared to the conveyor, a simple configuration can be employed.

Thus, the carbon dioxide removal device of the present embodiment and the method for removing carbon dioxide using the device (method for recovering the carbon dioxide adsorption capacity of the adsorbent) have been explained however, the present invention is not intended to be limited to the embodiments described above.

For example, in FIG. 1, the gas supply flow channel 30 is connected to the lower part of the reaction vessel 10, and the first gas discharge flow channel 31 and the second gas discharge flow channel 32 are connected to the upper part of the reaction vessel 10; however, the positions of disposition of the gas supply flow channel 30, the first gas discharge flow channel 31, and the second gas discharge flow channel 32 are not particularly limited. Furthermore, in FIG. 1, the first gas discharge flow channel 31 and the second gas discharge flow channel 32 are respectively connected to the reaction vessel 10; however, the first gas discharge flow channel 31 and the second gas discharge flow channel 32 may be configured by connecting one flow channel to the reaction vessel 10 and bifurcating this flow channel. Furthermore, in FIG. 1, from the viewpoint that discharge of water is made easier, the water supply flow channel 21 is connected to the upper part of the reaction vessel 10, and the water discharge flow channel 22 is connected to the lower part of the reaction vessel 10; however, the positions of connection of the water supply flow channel 21 and the water discharge flow channel 22 are not particularly limited.

Furthermore, in FIG. 1, the second temperature adjustment nit is provided outside the reaction vessel 10; however, the second temperature adjustment unit may be provided inside the reaction vessel. Furthermore, in FIG. 1, the third temperature adjustment unit 51 is provided outside the water collection unit 50; however, the third temperature adjustment unit 51 may be provided inside the water collection unit 50.

Furthermore, the gas supply amount adjustment unit 33, first gas discharge amount adjustment unit 34, second gas discharge amount adjustment unit 35, water supply amount adjustment unit 23, and water discharge amount adjustment unit 24 shown in FIG. 1 are valves; however, these units may formed from other instruments. The instrument that constitutes the water supply amount adjustment unit 23 may be, for example, an instrument such as a screw type flowmeter, an impeller type flowmeter, a bypass type flowmeter, a differential pressure type flowmeter, or an electromagnetic flowmeter. It is preferable that the water supply amount adjustment unit 23 includes a measuring instrument that measures the supply amount of water in order to adjust the supply amount of water based on the supply amount of water. In this case, the control unit 80 may be a control unit that controls the water supply amount adjustment unit 23 on the basis of an electric signal from the measuring instrument.

Furthermore, the carbon dioxide removal device 100 may further include a gas concentration adjustment unit for adjusting the concentrations of various gas components in the gas to be treated that is supplied to the reaction vessel. In this case, the control unit 80 may be a control unit that controls the gas concentration adjustment unit on the basis of the information detected by a first gas concentration detection means.

Furthermore, each constituent element of the carbon dioxide removal device 100 may be provided as a plurality of constituent elements. For example, a reaction vessel packed with the same or different adsorbents (adsorbents capable of adsorbing carbon dioxide or other gases) may be provided in the subsequent stage of the reaction vessel packed with an adsorbent. Furthermore, a valve for flow channel switching may also be provided in the piping part that connects the reaction vessel. In this case, the reaction vessel of the latter stag can be used, as necessary.

For example, it is thought that when the reaction vessel of a preceding stage is packed with an adsorbent capable of adsorbing carbon dioxide, carbon dioxide is first trapped and saturated, and carbon dioxide is discharged through an outlet port of the reaction vessel in the preceding stage. In a case in which carbon dioxide is first captured and saturated, that is, in a case in which the adsorbent adsorbs carbon dioxide in an amount equivalent to the adsorption capacity and does not adsorb carbon dioxide anymore, an adsorbent whose carbon dioxide adsorption capacity is decreased by circulating a gas other than carbon dioxide may be used in the reaction vessel that is provided in the subsequent stage. Examples of such an adsorbent include zeolite and activated carbon. Furthermore, in a case in which a gas other than carbon dioxide is first captured and saturated, an adsorbent having excellent carbon dioxide adsorption properties (adsorbent having a large carbon dioxide adsorption capacity) may be used in the reaction vessel that is provided in the subsequent stage. Examples of such an adsorbent include ceria (CeO₂). In a case in which the concentration ratio between carbon dioxide and the other gas in the gas to be treated is likely to vary, and it is not clearly known which gas is more likely to be captured and saturated, a system of providing two reaction vessels in a subsequent stage and selecting the reaction vessel to be used in accordance with the type of the gas that has been captured and saturated, may be used. In a case in which carbon dioxide can be removed only by using the reaction vessel of the preceding stage, an elimination treatment for carbon dioxide is not needed to be carried out in the reaction vessel of the subsequent stage, and the energy consumption can be reduced.

An example of the combination of the reaction vessel and the adsorbent may be a combination in which an adsorbent containing an oxide including at least one selected from the group consisting of rare earth elements, zirconium, and zinc, which has excellent CO₂ adsorption properties, is provided in the reaction vessel of the preceding stage, and an adsorbent containing an oxide including at least one selected from the group consisting of rare earth elements other than cerium, zirconium, and zinc, which has carbon dioxide adsorption properties and also has excellent H₂S adsorption properties, is provided in the reaction vessel of the subsequent stage. In a case in which carbon dioxide is removed from a gas to be treated containing carbon dioxide and hydrogen sulfide (H₂S) using a carbon dioxide removal device having such a configuration, even when carbon dioxide is captured and saturated in the reaction container of the preceding stage, and carbon dioxide is discharged from the reaction vessel of the preceding stage, carbon dioxide can be removed in the reaction vessel of the subsequent stage. Even in a case in which a gas other than carbon dioxide (hydrogen sulfide) is captured and saturated in the reaction vessel of the preceding stage, and the gas other than carbon dioxide is discharged from the reaction vessel of the preceding stage, the gas other than carbon dioxide can be removed by the adsorbent of the subsequent stage (for example, zeolite). However, generally the adsorptive force of hydrogen sulfide to an adsorbent is strong. Therefore, in order to eliminate hydrogen sulfide from an adsorbent, the load required for heating and pressure reduction is high compared to the case of eliminating carbon dioxide. Therefore, in the present configuration, from the viewpoint that energy consumption can be reduced, it is preferable to carry out the elimination step as appropriate such that carbon dioxide is not captured and saturated in the reaction vessel of the preceding stage.

Furthermore, it is acceptable that the carbon dioxide removal device 100 does not include the gas supply amount adjustment unit 33, first gas discharge amount adjustment unit 34, second gas discharge amount adjustment unit 35, first gas concentration detection unit 36, second gas concentration detection unit 37, first temperature adjustment unit 25, second temperature adjustment unit 41, third temperature adjustment unit 51, pressure adjustment unit 42, water collection unit 50, carbon dioxide collection unit 70, control unit 80, water circulation flow channel 60, and the like.

Furthermore, a carbon dioxide removal system may be configured using a plurality of the carbon dioxide removal devices 100 of the present embodiment. In this case, a plurality of carbon dioxide devices may be controlled by providing a controlling device for comprehensively controlling the multiple carbon dioxide removal devices.

### Examples

Hereinafter, the matters of the present invention will be described in more detail using Examples and Comparative Examples. However, the present invention is not intended to be limited to the following Examples. Meanwhile, the gas to be treated in a CO₂ adsorption/desorption cycle test of Examples and Comparative Examples was a gas simulating an exhaust gas from a thermal power plant.

### (Example 1)

### <CO₂ adsorption/desorption cycle test>

30 g of powdered cerium oxide (CeO₂) was pelletized by a pressing machine under a load of 500 kgf using a mold having a diameter of 40 mm. Next, the pellet was pulverized and then was granulated into a particulate form (particle size: 0.5 to 1.0 mm) using a sieve. Thus, a particulate adsorbent (hereinafter, simply referred to as "adsorbent") was obtained. Subsequently, 20.0 ml of the adsorbent was weighed using a graduated cylinder and was fixed in a reaction tube made of SUS. Next, an adsorption step, an elimination step, and a cooling step were carried out.

In the adsorption step, the temperature of the adsorbent was raised to 50°C using an electric furnace, and then while the temperature of the adsorbent was maintained at 50°C with the electric furnace, a mixed gas containing 15% by volume of CO₂, 5% by volume of O₂, 150 ppm of NO, and about 80% by volume of N₂ including saturated water vapor at about 50°C, was circulated in the reaction tube. The flow rate of the mixed gas was set to 2,000 mL/min. The CO₂ concentration at the outlet port of the reaction tube was measured using gas chromatography, and introduction of the gas was continued until the CO₂ concentration measured at the outlet port of the reaction tube was saturated. The CO₂ adsorption amount was measured from the difference between the CO₂ concentrations at the inlet port side and the outlet port side of the reaction tube until the CO₂ concentration was saturated.

In the subsequent desorption step, CO₂ was desorbed from the adsorbent by raising the temperature of the adsorbent to 200°C in an electric furnace. Subsequently, in the cooling step, the temperature of the adsorbent was cooled to 50°C while only N₂ gas was circulated in the reaction tube.

This series of steps (adsorption step, desorption step, and cooling step) were repeated 24 cycles, and then the CO₂ adsorption amount at the time of 24 cycles was measured. The CO₂ adsorption amount retention ratio in 24 cycles was calculated on the basis of the following formula.

CO₂ adsorption amount retention ratio in 24 cycles (%) = (CO₂ adsorption amount at the time of first cycle time)/(CO₂ adsorption amount at the time of 24 cycles) × 100

Next, a washing step was carried out by circulating liquid water at a rate of 10 ml/min in the reaction tube from the water supply flow channel connected in the upper side of the reaction tube. After the washing step, the adsorption step and the desorption step were carried out again. The CO₂ adsorption amount at the time of 25 cycles was measured, and the CO₂ adsorption amount in the 25 cycles was measured on the basis of the following formula.

CO₂ adsorption amount retention ratio (%) in 25 cycles = (CO₂ adsorption amount at the time of first cycle)/(CO₂ adsorption amount at the time of 25 cycles) × 100

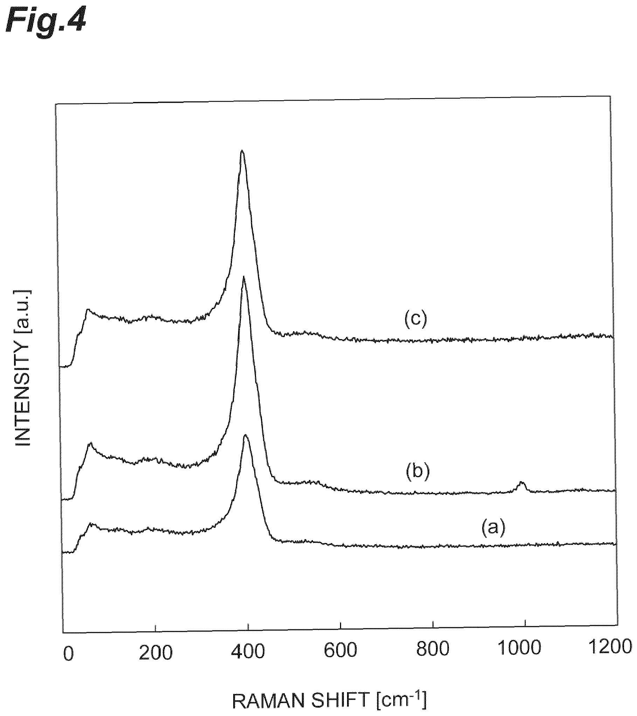

In Example 1, the Raman spectra of the adsorbent before the first cycle, after 24 cycles, and after 25 cycles were measured. Regarding the measurement conditions for the Raman spectra, a spot analysis was carried out at a laser wavelength of 532 nm, a magnification ratio of 50 times, and a measurement time of 5 minutes using a microscopic Raman spectrometer (RAMAN touch, manufactured by Nanophoton Corp.). The measurement results are shown in FIG. 4. FIG. 4(a) shows the Raman spectrum obtained before the first cycle, FIG. 4(b) shows the Raman spectrum obtained after 24 cycles, and FIG. 4(c) shows the Raman spectrum obtained after 25 cycles.

### (Example 2)

A CO₂ adsorption/desorption cycle test was carried out by the same procedure as in Example 1, except that the washing step was carried out by the following procedure. In the washing step of Example 2, discharge of water was not carried out at the time of water supply, and water was supplied into the reaction tube until the adsorbent packed in the reaction tube was immersed. Water was left to stand for 10 minutes in that state, and then water was discharged from the reaction tube to the downstream side.

### (Example 3)

A CO₂ adsorption/desorption cycle test was carried out by the same procedure as in Example 1, except that a mixed gas including 15% by volume of CO₂, 5% by volume of O₂, 300 ppm of SO₂, and about 80% by volume of N₂ was used as the mixed gas.

### (Example 4)

A CO₂ adsorption/desorption cycle test was carried out by the same procedure as in Example 2, except that a mixed gas including 15% by volume of CO₂, 5% by volume of O₂, 300 ppm of SO₂, and about 80% by volume of N₂ was used as the mixed gas.

### (Comparative Example 1)

A CO₂ adsorption/desorption cycle test was carried out by the same procedure as in Example 1, except that the washing step was not carried out.

### (Comparative Example 2)

A CO₂ adsorption/desorption cycle test was carried out by the same procedure as in Example 3, except that the washing step was not carried out.

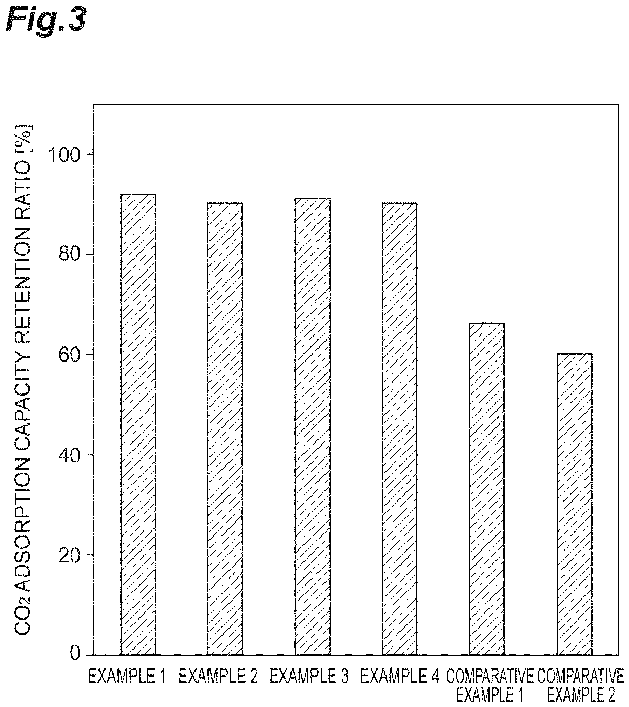

The results of the CO₂ adsorption/desorption cycle test of Examples and Comparative Examples are shown in Table 1 and FIG. 3. FIG. 3 is a graph showing the results of the CO₂ adsorption amount retention ratio after 25 cycles.

**[Table 1]**

| | Washing step | NOx | SOx | CO₂ adsorption amount retention ratio (%) | |
|---|---|---|---|---|---|
| | | (NO) | (SO₂) | 24 cycles | 25 cycles |
| Example 1 | Present | Present | - | 65 | 92 |
| Example 2 | Present | Present | - | 65 | 90 |
| Example 3 | Present | - | Present | 63 | 91 |
| Example 4 | Present | - | Present | 63 | 90 |
| Comparative Example 1 | Absent | Present | - | 67 | 66 |
| Comparative Example 2 | Absent | - | Present | 62 | 60 |

In Examples 1 to 4 where the washing step was carried out, the CO₂ adsorption amount retention ratio in 25 cycles was more or less 90%, and the adsorbents exhibited high CO₂ adsorption/desorption cycle characteristics. On the other hand, in Comparative Examples 1 and 2 where the washing step was not carried out, the CO₂ adsorption amount retention ratios in 25 cycles were all noticeably low compared to Examples.

Furthermore, as shown in FIG. 4, a peak originating from cerium nitrate was recognized near 1,000 cm⁻¹ in the Raman spectrum after 24 cycles. That is, it was confirmed that cerium nitrate was precipitated on the adsorbent surface. On the other hand, in the Raman spectrum after the adsorption step (after 25 cycles), the peak near 1,000 cm⁻¹ disappeared, and a spectrum similar to that obtained before the first cycle was recognized. From these results, it was confirmed that when a water adjustment unit is provided in a carbon dioxide removal device and a washing step is carried out, the carbon dioxide adsorption capacity of the adsorbent can be recovered, and the CO₂ adsorption/desorption cycle characteristics of the adsorbent can be enhanced.

### Reference Signs List

1: adsorbent, 10: reaction vessel, 20: water adjustment unit, 21: water supply flow channel, 22: water discharge flow channel, 23: water supply amount adjustment unit, 24: water discharge amount adjustment unit, 25: first temperature adjustment unit, 40: temperature detection unit, 41: second temperature adjustment unit, 50: water collection unit, 51: third temperature adjustment unit, 80: control unit.

## Claims

1. A carbon dioxide removal device to bring a gas to be treated comprising carbon dioxide into contact with the adsorbent and thereby remove carbon dioxide from the gas, comprising an adsorbent and a reaction vessel comprising the adsorbent installed therein,
wherein the carbon dioxide removal device further comprises a water adjustment unit to supply water to the reaction vessel and discharge water from the reaction vessel.

2. The carbon dioxide removal device according to claim 1, wherein
the water adjustment unit comprises:
a water supply flow channel to supply water to the reaction vessel;
a water supply amount adjustment unit to adjust the amount of water to be supplied from the water supply flow channel to the reaction vessel;
a water discharge flow channel to discharge water from the reaction vessel; and
a water discharge amount adjustment unit to adjust the amount of water to be discharged from the reaction vessel to the water discharge flow channel.

3. The carbon dioxide removal device according to claim 2, wherein
the carbon dioxide removal device further comprises a carbon dioxide adsorption capacity detection unit to detect the carbon dioxide adsorption capacity of the adsorbent, and
the water supply amount adjustment unit is configured to adjust the amount of water to be supplied to the reaction vessel on the basis of the carbon dioxide adsorption capacity of the adsorbent detected at the carbon dioxide adsorption capacity detection unit.

4. The carbon dioxide removal device according to claim 2 or 3, wherein
the carbon dioxide removal device further comprises a temperature detection unit to detect the temperature of the adsorbent, and
the water supply amount adjustment unit is configured to adjust the amount of water to be supplied to the reaction vessel on the basis of the temperature of the adsorbent detected at the temperature detection unit.

5. The carbon dioxide removal device according to any one of claims 1 to 4, wherein the water adjustment unit further comprises a first temperature adjustment unit to adjust the temperature of water to be supplied to the reaction vessel.

6. The carbon dioxide removal device according to any one of claims 1 to 5, further comprising a second temperature adjustment unit to adjust the temperature inside the reaction vessel.

7. The carbon dioxide removal device according to claim 6,
wherein the carbon dioxide removal device further comprises a temperature detection unit to detect the temperature of the adsorbent, and
the second temperature adjustment unit is configured to adjust the temperature inside the reaction vessel on the basis of the temperature detected at the temperature detection unit.

8. The carbon dioxide removal device according to any one of claims 1 to 7, further comprising a water collection unit to collect water discharged from the reaction vessel.

9. The carbon dioxide removal device according to claim 8, further comprising a third temperature adjustment unit to adjust the temperature of water inside the water collection unit.

10. The carbon dioxide removal device according to any one of claims 1 to 9, wherein the adsorbent comprises a metal oxide comprising at least one selected from the group consisting of rare earth elements and zirconium.

11. A method for recovering the carbon dioxide adsorption capacity of an adsorbent using the carbon dioxide removal device according to any one of claims 1 to 10,
the method comprising supplying water to the reaction vessel, bringing water into contact with the adsorbent, and then discharging water inside the reaction vessel.

12. The method according to claim 11, further comprising:
a step of supplying water to the reaction vessel, bringing water into contact with the adsorbent, and then detecting the temperature of the adsorbent; and
a step of heating or cooling the interior of the reaction vessel on the basis of the temperature of the adsorbent thus detected, and then discharging water inside the reaction vessel.
